(19) Europäisches Patentamt
European Patent Office
Office européen des brevets

(11) Veröffentlichungsnummer: **0 272 664 B1**

(12) **EUROPÄISCHE PATENTSCHRIFT**

(45) Veröffentlichungstag der Patentschrift: **27.05.92**

(51) Int. Cl.$^5$: **C08G 18/62**, C09D 175/04, C09J 137/00, C08L 33/04

(21) Anmeldenummer: **87118923.9**

(22) Anmeldetag: **21.12.87**

# (54) Härtbare Mischungen und deren Vewendung.

(30) Priorität: **24.12.86 DE 3644372**

(43) Veröffentlichungstag der Anmeldung:
**29.06.88 Patentblatt 88/26**

(45) Bekanntmachung des Hinweises auf die Patenterteilung:
**27.05.92 Patentblatt 92/22**

(84) Benannte Vertragsstaaten:
**AT BE CH DE ES FR GB GR IT LI NL SE**

(56) Entgegenhaltungen:
**EP-A- 0 001 088**
**DE-A- 1 595 408**

**CHEMICAL ABSTRACTS, Band 84, Nr. 4, 26. Januar 1976, Seite 46, Zusammenfassung Nr. 18323b, Columbus, Ohio, US; & JP-A-75 102 696 (NIPPON POLYURETHANE INDUSTRY CO., LTD) 14-08-1975**

(73) Patentinhaber: **HOECHST AKTIENGESELLSCHAFT**
**Postfach 80 03 20**
**W-6230 Frankfurt am Main 80(DE)**

(72) Erfinder: **Just, Christoph, Dr.**
**Akazienstrasse 8**
**W-6272 Niedernhausen/Taunus(DE)**
Erfinder: **Dürr, Helmut, Dr.**
**Hansaallee 111**
**W-6000 Frankfurt am Main(DE)**
Erfinder: **Brindöpke, Gerhard, Dr.**
**Loreleistrasse 18**
**W-6230 Frankfurt am Main 80(DE)**

EP 0 272 664 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, hydroxylgruppenhaltige Polymer, wie Polyacrylverbindungen, mit unverkappten oder verkappten Polyisocyanaten zu härten. Diese Systeme trocknen jedoch nach den heutigen Ansprüchen nicht mit mehr schnell genug. Außerdem sind die Haftung auf Unterlagen und das Pigmentaufnahmevermögen häufig nicht ausreichend. Beständigkeit gegen organische Flüßigkeiten, wie Superkraftstoff, wird erst bei relativ hohen Hydroxylfunktionalitäten bzw. Vernetzungsgraden erreicht, d.h. es müssen relativ hohe Mengen an verhältnismäßig teuren und physiologisch nicht unbedenklichen Polyisocyanaten eingeetzt werden. Schließlich beeinflussen die (Poly)aminoverbindungen, die durch partielle Hydrolyse der Polyisocyanate aufgrund der Luftfeuchtigkeit entstehen, die Eigenschaften der gehärteten Systeme, wie Witterungs- und Lichtstabilität, zumeist nachteilig.

Die EP-Offenlegungsschrift 1088 offenbart Polymere, welche 1,3-Dioxolan-2-on-Gruppen enthalten und die auch auf dem Lacksektor einsetzbar sind. Fragen der Trocknungsgeschwindigkeit und der Lösemittelbeständigkeit werden in dieser Druckschrift nicht angesprochen.

Aufgabe der Erfindung war es, härtbare Mischungen bereitzustellen, welche bezüglich der einzelnen vorstehend aufgeführten Nachteile oder zumindest bezüglich deren Kombination eine Verbesserung erbringen.

Es wurde nun gefunden, daß sich diese Aufgabe überraschenderweise lösen läßt durch härtbare Mischungen auf Basis von

(A) Verbindungen, enthaltend 1,3-Dioxolan-2-on-Gruppen, Hydroxylgruppen sowie gegebenenfalls weitere Gruppen,

(B) Polyisocyanaten und/oder Aminoplastharzen, vorzugsweise Melaminharzen sowie

(C) gegebenenfalls weiteren härtenden Verbindungen.

Gegenstand der Erfindung ist weiterhin die Verwendung dieser härtbaren Mischungen, insbesondere zur Herstellung von Formkörpern und Überzügen sowie als Bestandteil in Lacken oder Klebern.

Die Komponente (A) der erfindungsgemäßen Mischungen enthält Struktureinheiten, die sich ableiten

a) von einem 1,3-Dioxolan-2-on-Gruppen enthaltenden, olefinisch ungesättigten Monomeren in Mengen von 3 bis 95 Gew.-%, vorzugsweise 5 bis 70 Gew.-% und insbesondere 5 bis 20 Gew.-%, bezogen auf die gesamte Komponente (A),

b) von einem olefinisch ungesättigten Monomeren, das mit (a) copolymerisierbar ist und OH-Gruppen enthält, in Mengen von 95 bis 7 Gew.-%, vorzugsweise 95 bis 30 Gew.-% und insbesondere 4 bis 50 Gew.-%, bezogen auf (A), und gegebenenfalls

c) von einem oder mehreren anderen mit (a) und (b) copolymerisierbaren, olefinisch ungesättigten Monomeren in Mengen bis zu 90 Gew.-%, vorzugsweise bis zu 60 Gew.-% und insbesondere bis zu 40 Gew.-%, bezogen auf (A).

Die Struktureinheiten gemäß (a) sind vorzugsweise statistisch über die Molekülkette von (A) verteilt, wobei der Begriff "statistisch" auch eine Blockverteilung mit einschließen soll. Die Funktionalität an 1,3-Dioxolan-2-on-Gruppen in (A) beträgt im allgemeinen 15 bis 500 mMol/100 g(A), vorzugsweise 25 bis 400 mMol/100 g (A).

Vorzugweise handelt es sich bei den Monomeren entsprechend a) um solche der allgemeinen Formel

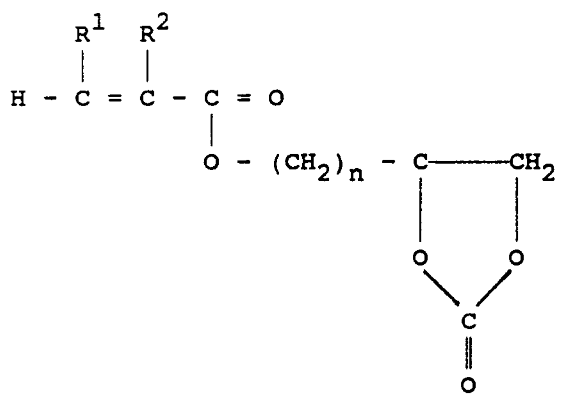

(I)

Hierin stehen für n für eine ganze Zahl von 1 bis 6, vorzugsweise 1, und $R^1$ für H, Alkyl mit vorzugsweise 1 bis 10, insbesondere 1 bis 6 C-Atomen, das linear, verzweigt oder cyclisch sein kann, sowie für COOR' (R' = H oder Alkyl wie vorstehend); $R^2$ bedeutet unabhängig von $R^1$ H oder Alkyl wie

vorstehend angegeben; $R^3$ steht für H, Methyl oder Ethyl. Typische Vertreter hierfür sind zum Beispiel (2-Oxo-1,3-dioxolan-4-yl)methylacrylat, 2-(Oxo-1,3-dioxolan-4-yl)methyl(meth)acrylat, 4-(2-Oxo-1,3-dioxolan-4-yl)methylitaconat, (2-Oxo-1,3-dioxolan-4-yl)methylmaleat.

Die Monomeren entsprechend (b) sind hydroxylgruppenhaltige Ester von olefinisch ungesättigten Mono- oder Dicarbonsäuren mit 1 bis 8, vorzugsweise 2 oder 3 C-Atomen im Alkoholrest, wobei als Säuren beispielsweise Acryl- und Methacrylsäure( = Meth)acrylsäure), Crotonsäure, Fumar-, Malein-, Itacon-; Sorbinsäure oder ungesättigte Fettsäuren mit 8 bis 22 C-Atomen in Frage kommen. (Meth)acrylsäure ist dabei bevorzugt. Beispiele hierfür sind Ester dieser Säuren mit Ethylenglykol, Propylenglykol-1,2 oder -1,3, Butylenglykol-1,4, Trimethylolpropan,

Aus DE-A 15 95 408 sind Polymere bekannt, die durch Umsetzung von 1,3-Dioxolan-2-on-Gruppen enthaltenden Polymeren mit Isocyanaten erhalten werden. Bei dieser Reaktion, die bei relativ hohen Temperaturen abläuft, werden aus den 1,3-Dioxolan-2-on-Gruppen Oxazolidinon-2-Gruppen gebildet.

Glycerin udgl.; weiterhin Umsetzungsprodukte dieser Säuren mit endständigen Epoxiden, wie z.B. Hexenoxid oder Dodecenoxid sowie Umsetzungsprodukte dieser Säuren mit Glycidylestern, vorzugsweise von in α-Stellung verzweigten, gesättigten aliphatischen Monocarbonsäure mit 8 bis 14 C-Atomen, wie z.B. ®Cardura E 10 (Glycidylester der "Versaticsäure"). Sofern entsprechende Ester von ungesättigten Dicarbonsäuren verwendet werden, sollen diese nur eine C = C-Doppelbindung enthaltend. Besonders bevorzugt ist Hydroxyethyl(meth)acrylat.

Bei den Monomeren entsprechend (c) handelt es sich beispielsweise um die nachstehenden, wobei vorzugsweise mindestens eines dieser Monomeren eingesetzt wird:

(c1) vinylaromatische Kohlenwasserstoffe, wie vorzugsweise Styrol oder substituierte Styrole, wie α-Methylstyrol, p-Chlorstyrol und Vinyltoluole, wie p-Methylstyrol, in Mengen von 0 bis 70 Gew.-%, vorzugsweise 10 bis 60 Gew.-%, bezogen auf (A);

(c2) Ester, Amide oder Nitrile von olefinisch ungesättigten Mono- oder Dicarbonsäuren in Mengen von 0 bis 50 Gew.-%, vorzugsweise 5 bis 40 Gew.-%, bezogen auf (A). Die Ester sind hierbei bevorzugt. Als Säuren kommen die gleichen wie vorstehend unter (b) genannt in Frage. Die Alkoholkomponente in den Estern enthält im allgemeinen 1 bis 18, vorzugsweise 1 bis 13 C-Atome. Beispiele hierfür sind: Methyl-, Ethyl-, Butyl-, 2-Ethylhexyl-, Lauryl- oder Stearylester der (Meth)acrylsäure. Als Alkoholkomponente sind auch Fettelkohole, Cycloalkohole, Monalkylether von Ethylen-oder Propylenglykolen sowie Versaticalkohole geeignet.

Unter Amiden dieser Säuren seien hier insbesondere solche des Typs -CONR″R‴ verstanden, worin R″ für H, Alkyl mit vorzugsweise 1 bis 6 C-Atomen oder für $(RO)_nX$ (R = eine gegebenenfalls hydroxylgruppenhaltige ($C_1$-$C_6$)Alkylengruppe und n = 1 bis 10, X = H oder ($C_1$-$C_6$)Alkyl) steht und R‴ unabhängig davon H oder Alkyl mit vorzugsweise 1 bis 6 C-Atomen bedeutet. Genannt seien hier (Meth)-acrylsäureamid, N-Methylol(meth)acrylamid sowie entsprechende Ether wie N-Methylol(meth)-acrylamidmethyl- oder -butylether und Dialkylaminoethyl(methy)acrylamid. Als Nitril ist beispielsweise (Meth)acrylnitril zu nennen;

(c3) addierbare Ester von vorzugsweise in α-Stellung verzweigten, gesättigten aliphatischen Monocarbonsäuren in Mengen von 0 bis 50 Gew.-%, vorzugsweise 0 bis 20 Gew.-%, bezogen auf (A); Beispiele hierfür sind Glycidylester entsprechender Säuren mit 8 bis 14 C-Atomen, insbesondere α-Monoalkan- oder α-Dialkanmonocarbonsäuren, wie die sogenannten "Versaticsäuren";

(c4) olefinisch ungesättigte Mono- oder Dicarbonsäuren in Mengen von 0 bis 30 Gew.-%, vorzugsweise 0 bis 15 Gew.-%, bezogen auf (A), wobei bei Anwesenheit von (c3) mindestens eine äquivalente Menge dieser Komponente (c4) vorhanden ist; als Säuren kommen hier vor allem die unter (b) genannten in Frage; weiterhin Halbester ungesättigter Dicarbonsäuren, deren Alkoholkomponente den unter (c2) genannten Estern entspricht;

(c5) Glycidylester von olefinisch ungesättigten Mono- oder Dicarbonsäuren in Mengen von 0 bis 40 Gew.-%, vorzugsweise 0 bis 30 Gew.-%. Bezüglich der Säuren gilt wiederum das vorstehend bei (c4) Gesagte; ein bevorzugter Vertreter ist hier Glycidyl(meth)acrylat;

(c6) ungesättigte Ester einer vorzugsweise in α-Stellung verzweigten gesättigten Monocarbonsäure in Mengen von 0 bis 30 Gew.-%, vorzugsweise 0 bis 20 Gew.-%. Beispiele hierfür sind Vinylester von entsprechenden Säuren mit 2 bis 20, vorzugsweise 2 bis 14 C-Atomen, wie Vinylacetat, Vinylpropionat, Versaticsäurevinylester, Linolsäurevinylester;

(c7) Vinylverbindungen (andere als Vinylester), wie Vinylester, beispielsweise Methyl-, Ethylvinyleter oder Allylglycidylether; N-Vinylpyrrolidon in Mengen von 0 bis 30 Gew.-%, vorzugsweise 0 bis 20 Gew.-%, bezogen auf (A).

Daneben können in Sonderfällen auch noch Struktureinheiten in (A) vorhanden sein, die sich von Olefinen, wie Ethylen oder Propylen oder von Monomeren mit Urethangruppen, erhalten beispielsweise

durch Umsatz von Vinylisocyanat mit üblichen Verkappungsmitteln, ableiten.

Bezüglich der Monomeren entsprechend (a), (b) und (c1) bis (c7) sowie den vorstehend genannten können jeweils auch Gemische innerhalb der einzelnen Gruppen eingesetzt werden. Bevorzugt enthält die Komponente (A) neben Struktureinheiten (a) und (b) noch solche entsprechend (c1) und/oder (c2). Typische Vertreter von (a) haben folgende Zusammensetzung:

(2-Oxo-1,3-dioxolan-4-yl)methyl(meth)acrylat/2-Hydroxyethyl(meth)acrylat/Butyl(meth)acrylat/Ethylhexyl-(meth)acrylat;

(2-Oxo-1,3-dioxolan-4-yl-)methyl(meth)acrylat/2-Hydroxyethyl(meth)acrylat/Butyl(meth)acrylat/Ethylhexyl-(meth)acrylat/Styrol;

(2-Oxo-1,3-dioxolan-4-yl-)methylitaconat/2-Hydroxyethyl(meth)acrylat/Butyl(meth)acrylat/Ethylhexyl(meth)-acrylat;

(2-Oxo-1,3-dioxolan-4-yl-)methylmaleat/2-Hydroxyethyl(meth)acrylat/Butyl(meth)acrylat/Ethylhexyl(meth)-acrylat;

(2-Oxo-1,3-dioxolan-4-yl-)methyl(meth)acrylat/2-Hydroxyethyl(meth)acrylat/Methyl(meth)acrylat/Styrol;

(2-Oxo-1,3-dioxolan-4-yl)methylacrylat/1,4-Butandiolmonoacrylat/2Ethylhexylacrylat/Styrol;

(2-Oxo-1,3-dioxolan-4-yl)methylmethacrylat/2-Hydroxypropylmethacrylat/Methylmethacrylat/Styrol;

(2-Oxo-1,3-dioxolan-4-yl)methylmethacrylat/Methacrylsäurelaurylester/2-Ethoxyethylmethacrylat/Styrol;

(2-Oxo-1,3-dioxolan-4-yl)methylmethacrylat/Umsetzungsprodukt "Cadura" E 10 und Acrylsäure/Styrol/Methylmethacrylat/Hydroxyethylmethacrylat;

(2-Oxo-1,3-dioxolan-4-yl)methylmethacrylat/2-Methoxyethylacrylat/2-Hydroxypropylacrylat/n-Butylmethacrylat/Styrol;

(2-Oxo-1,3-dioxolan-4-yl)methylmethacrylat/n-Butylacrylat/t-Butylacrylat/Methylmethacrylat/Hydroxyethylmethacrylat.

Das Molekulargewicht $\overline{M}_{\overline{W}}$ (Gewichtsmittel) von (A), bestimmt mittels Gelchromatographie (Polystyrolstandard) liegt im allgemeinen zwischen 1000 und 50000, vorzugsweise zwischen 3000 und 30000. Sofern die Komponente (A) OH-Gruppen als mit Isocyanatgruppen reaktiven Gruppen enthält, beträgt die OH-Zahl zumeist 20 bis 200, vorzugsweise 45 bis 180 und insbesondere 50 bis 150. Die Säurezahlen liegen - sofern überhaupt carboxylgruppenhaltige Monomere eingesetzt werden - im allgemeinen unterhalb von 15, vorzugsweise unterhalb von 9.

Die Herstellung der Komponente (A) kann in der Art erfolgen, daß entsprechende Oligomere oder Polymere, die eine genügende Zahl von statistisch verteilten Glycidyl-(Epoxid)-Gruppen aufweisen, in Gegenwart eines Katalysators in bekannter Weise mit $CO_2$ umgesetzt werden. Hierbei werden alle oder ein Teil der Glycidyl(Epoxid)-Gruppen in 1,3-Dioxolan-2-on-Gruppen umgewandelt. Derartige Verfahren sind beispielsweise in der PCT(WO)-Patentanmeldung 84/03 701 sowie in den DE-Patentanmeldungen P 35 29 263.6 und P 36.00.602.5 beschrieben. Auf deren Offenbarung, einschließlich der bevorzugten Ausführungsformen, wird hier Bezug genommen.

Bevorzugt wird die Komponente (A) erfindungsgemäß jedoch durch Copolymerisation der Monomeren entsprechend (a) und (b) sowie gegebenenfalls (c) hergestellt.

Die Monomeren gemäß (a), vorzugsweise diejenigen der Formel (I), können dabei wiederum durch Anlagerung von $CO_2$ an die entsprechenden Glycidylester ungesättigter Carbonsäuren, wie (Meth)-acrylsäure, Maleinsäure, Fumarsäure etc., gemäß den vorstehend genannten Literaturstellen erhalten werden.

Die Copolymerisation erfolgt in bekannter Weise vorzugsweise nach dem Radikalkettenmechanismus und nach den üblichen Methoden der Substanz-, Lösungs-, Fällungs-, Dispersions-, Emulsions- oder Perlpolymerisation. Bevorzugt sind die Substanz-, Lösungs- oder Emulsionspolymerisation und insbesonders die Substanz- oder Lösungspolymerisation.

Geeignete radikalische Initiatoren sind beispielsweise aliphatische Azo-Verbindungen, wie Azoisobuttersäurenitril, Peroxide, wie Diacylperoxide, z.B. Dibenzoylperoxid, Dialkylperoxide, wie Di-tert.-Butylperoxid oder Dialkylhydroperoxide, wie tert.-Butylhydroperoxid. Besonders bevorzugt ist Di-tert.-Butylperoxid. Deren Anteil beträgt im allgemeinen 0,5 bis 4,0 Gew.-%, vorzugsweise 1 bis 3 Gew.-%, bezogen auf das Gesamtgewicht der Ausgangskomponenten.

Der Initiator kann zusammen mit den Monomeren allmählich zudosiert werden. Ein Teil des Initiators kann beispielsweise im Falle der Substanzpolymerisation auch bereits den vorgelegten Substanzen zudosiert werden.

In gewissen Fällen kann es wünschenswert sein, der Polymerisationsmischung auch andere, die Kettenlänge modifizierende Mittel (Regler) zuzugeben, wie Mercaptane, dimerisiertes $\alpha$-Methylstyrol und ähnliche. Von diesen Verbindungen werden im allgemeinen 0,1 bis 4,0 Gew.-%, vorzugsweise 1 bis 2 Gew.-%, bezogen auf Gesamtmenge der Monomeren, verwendet.

Falls die Copolymerisation in Substanz erfolgt, werden vorzugsweise ein nicht zur Homopolymerisation neigendes Monomeres, wie Maleinsäureester oder die unter (c3) genannten Verbindungen eingesetzt, wobei aus letzteren erst während der Polymerisation der polymerisierbare Ester entsteht. Wird in Lösung polymerisiert, so kommen hierfür die üblichen, unter den Polymerisationsbedingungen inerten organischen Lösemittel in Betracht, wie beispielsweise halogenierte Kohlenwasserstoffe, Ether, wie Diethylether, Dimethyldiglykol, Tetrahydrofuran oder Dioxan, Ketone, wie beispielsweisse Methylethylketon, Aceton, Cyclohexanon und ähnliche, Ester wie Butylacetat, Ethylglykolacetat, Methylglykolacetat, Methoxypropylacetat, aliphatische oder aromatische Kohlenwasserstoffe, wie Hexan, Heptan, Cyclohexan, Benzol, Xylol, Toluol sowie aromatische Lösemittel im Siedebereich von ca. 150 bis 180 ° C (®Solvesso). Die Lösemittel können dabei einzeln oder im Gesmich eingesetzt werden, letzteres insbesondere dann, wenn die Lösekraft des einzelnen Lösemittels nicht ausreichen sollte, da dessen Polarität unter Umständen zu gering ist.

Die Copolymerisation kann im weiten Temperaturbereich von etwa 20 bis 250 ° C, vorzugsweise 60 bis 180 ° C bei Reaktionszeiten von 3 bis 10 Stunden, vorzugsweise 5 bis 8 Stunden durchgeführt werden. Üblicherweise wird dabei Normaldruck angewandt, jedoch können in manchen Fällen höhere Drucke von Vorteil sein.

Die erfindungsgemäßen Komponente (b) besteht aus Polyisocyanaten und/oder aus Aminoplastharzen, vorzugsweise Melaminharzen.

Die Polyisocyanate können dabei in unverkappter sowie in teil- oder vollverkappter Form eingesetzt werden, wobei die unverkappten Polyisocyanate bevorzugt sind.

Als unverkappte Polyisocyanate eignen sich die aus der Polyurethanchemie bekannten Verbindungen, wie aliphatische, cycloaliphatische oder aromatische Polyisocyanate oder entsprechende Präpolymere. Beispiele für derartige Polyisocyanate sind die aliphatischen Trimethylen-, Tetramethylen-, Pentamethylen-, Hexamethylen-, 1,2-Propylen-, 1,2-Butylen-, 2,3-Butylen-, 1,3-Butylen-, Äthyliden- und Butylidendiisocyanate, 2.2.4-Trimethylhexamethylendiisocyanat, 1,12-Dodecandiisocyanat, Dicycloalkylendiisocyanate wie 1,3-Cyclopentan-, 1,4-Cyclopentan- und 1,2-, 1,3- und 1,4-Cyclohexandiisocyanate sowie Isophorondiisocyanat (IPDI), weiterhin Diisocyanate dimerer Säuren, die aromatischen Diisocyanate, wie 1,4-Phenylen-, 1,4-Phenylen-, 4,4′-Diphenyl-, 1,5-Naphthalin- und 1,4-Naphthalindiisocyanate, die aliphatisch-aromatischen Diisocyanate wie 4,4′-Diphenylenmethan-, 2,4- und 2,6-Toluylen-, 4,4′-Toluidin- und 1,4-Xylilendiisocyanate, die kernsubstituierten aromatischen Isocyanate wie Dianisidindiisocyanat, 4,4′-Diphenyletherdiisocyanat und Chlordiphenylendiisocyanat, Diphenylmethan-2,4′- und/oder -4,4′-dissocyanat, 3,2′- oder 3,4-Diisocyanato-4-methyldiphenylmethan, die Triisocyanate wie Triphenylmethan-4,4′-4″-Triisocyanat, 1,3,5-Benzoltriisocyanat und 2,4,6-Toluoltriisocyanat und die Tetraisocyanate, wie 4,4′-Diphenyldimethylmethan-2,2′-5,5′-tetraisocyanat oder Gemische dieser Verbindungen.

Neben diesen einfachen Polyisocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Als Polyisocyanate können weiterhin, die polymerisierten Polyisocyanate, wie das Dimere von Tolylendiisocyanat, isocyanurathaltiges Polyisocyanat aus 3-Isocyanatomethyl-3,3,5-trimethyl-cyclohexylisocyanat und dergleichen, oder auch trimerisierte Isocyanate, wie sie etwa in der DE-Patentschrift 951 168 beschrieben sind, eingesetzt werden.

Geeignete Polyisocyanate sind schließlich auch die bekannten, endständigen Isocyanatgruppen aufweisenden Präpolymere, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen oder Wasser zugänglich sind. Beispielsweise sei hier das Umsetzungsprodukt aus 1 Mol Trimethylolpropan mit 3 Mol Toluylen-diisocyanat oder IPDI genannt. Weiterhin kommt hier auch ein Umsetzungsprodukt aus 1 Mol Wasser und 3 Mol Hexamethylendiisocyanat mit einem NCO-Gehalt von 16 bis 17 Gew.-% in Frage. Bevorzugt ist dabei das zuletzt genannte Umsetzungsprodukt aus Wasser und Hexamethylendiisocyanat. Der NCO-Gehalt des Umsetzungsproduktes gilt für eine 75 Gew.-%ige Lösung in Xylol/Ethylenglykolacetat. Zur Reaktion mit den Polyisocyanaten sind auch Verbindungen des Molekulargewichtsbereiches von 300 bis 10 000, vorzugsweise von 400 bis 6000, die insgesamt mindesten zwei Aminogruppen und/oder Hydroxylgruppen aufweisen, geeignet. Bevorzugt sind hierbei die entsprechenden Polyhydroxyverbindungen, z.B. die in der Polyurethanchemie an sich bekannten Hydroxypolyester, Hydroxypolyether und/oder hydroxylgruppenhaltige Acrylatharze. Bezüglich derartiger Polyhydroxyverbindungen sei beispielsweise auf die DE-Offenlegungsschrift 31 24 784 verwiesen.

In diesen bekannten Präpolymeren entspricht das Verhältnis von Isocyanatgruppen zu gegenüber NCO-reaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung der NCO-Präpolymeren eingesetzten Ausgangsmaterialien werden im übrigen vorzugsweise so gewählt, daß die NCO-Präpolymeren a) eine mittlere NCO-Funktionalität von 2 bis 4, vorzugsweise von 2 bis 3 und b) ein mittleres Molekulargewicht von 500 - 10 000, vorzugsweise von 800 bis 4000 aufweisen.

Mit diesen unverkappten Polyisocyanaten einschließlich der obigen Präpolymeren ist eine Härtung der Komponente (A) bereits bei Raumtemperatur oder wenig darüber möglich. Dabei ist die Verwendung von Katalysatoren zweckmäßig. Als solche sind beispielsweise organische Zinnverbindungen, wie Dibutylzinndilaurat, Dibutylzinndiacetat, Dibutyloxozinn, sowie in manchen Fällen auch tertiäre Amine brauchbar. Die Menge liegt im allgemeinen zwischen 0,001 und 10 Gew.-%, vorzugsweise zwischen 0,01 und 5 Gew.-%, bezogen auf Komponente (A).

Als Polyisocyanate können auch teil- oder vollverkappte Polyisocyanate zum Einsatz kommen. Als Verkappungsmittel eignen sich aliphatische, cycloaliphatische oder alkylaromatische (einwertige) Alkohole z.B. niedere aliphatische Alkohole wie Methyl- oder Ethylalkohol, die verschiedenen Propyl-, Butyl- oder Hexylalkohole, Heptyl-, Octyl-, Nonyl- oder Decylalkohol und ähnliche, ferner ungesättigte Alkohole wie Allylalkohole, cycloaliphatische Alkohole wie Cyclopentanol, Cyclohexanol, alkylaromatische Alkohole wie Benzylalkohol, Methyl- sowie p-Methoxy- und p-Nitrobenzylalkohol und Monoäther von Glykolen wie Ethylenglykolmonoäthyläther, -monobutyläther und ähnliche. Weitere Verkappungsmittel sind Ketoxime wie Methylethylketonoxim, Acetonoxim, sowie längerkettige Oxime mit vorzugsweise bis zu 10 C-Atomen, wie Methyl, n-Amylketoxim und Dibutylketoxim, weiterhin Cyclohexanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole wie Diäthyläthanolamin. Das als Blockierungsmittel bekannte Phenol kann in solchen Fällen eingesetzt werden, bei denen das Umsetzungsprodukt zur Herstellung von lösungsmittelhaltigen Lacken verwendet wird.

Selbstverständlich können auch Gemische der oben erläuterten verschiedenen Typen von Polyisocyanaten eingesetzt werden.
Bei Verwendung dieser (teil)verkappten Polyisocyanate sind zumeist erhöhte Aushärtungstemperaturen von 40 bis 150 ° C erforderlich.

Die Menge an Polyisocyanat richtet sich nach der Menge an damit reaktiven Gruppen in der Komponente (A), insbesondere der OH-Zahl. Zweckmäßigerweise wird das Polyisocyanat in äquivalenten Mengen eingesetzt, wenngleich ein Überschuß an Polyisocyanat zumeist nicht schädlich ist. Das überschüssige (wie auch teilweise das in stöchiometrischen Mengen vorhandene) Polyisocyanat wird zwar durch die Luftfeuchtigkeit hydrolysiert, wobei (Poly)aminoverbindungen entstehen, welche an sich die Witterungs- und Lichtstabilität negativ beeinflussen. Vorliegend stören sie jedoch nicht, da sie von den 1,3-Dioxolan-2-on-Gruppender Komponente (A) bereits bei niederen Temperaturen unter Bildung von Urethan-Gruppen und Kettenverlängerung bzw. weiterer Vernetzung abgefangen werden. Diese Urethangruppen fördern u.a. die Haftung auf Substraten, es handelt sich hierbei also um erwünschte Gruppierungen, so daß erfindungsgemäß die ansonsten schädlichen (Poly)aminoverbindungen eine positive Wirkung zeigen. Aus diesen Gründen ist auch erfindungsgemäß die Verwendung eines Polyisocyanatüberschusses ("Übervernetzung") für die Eigenschaften des Härtungsproduktes nicht nachteilig, sondern in bestimmten Grenzen sogar förderlich, da die durch Hydrolyse entsprechenden Polyaminoverbindungen in vorteilhafte Gruppen umgewandelt werden. Zumindest gilt dies, solange die "Abfangkapazität" der Komponente (A) ausreicht.

Als Komponente (B) können erfindungsgemäß auch Aminoplastharz, vorzugsweise Melaminharze dienen, sofern sie mit der Komponente (A) verträglich sind. Die erfindungsgemäß eingesetzten Aminoplastharze sind vorzugsweise in organischen Lösungsmitteln löslich. Als Beispiel für derartige Aminoplastharze seien hier Aminaldehydharze, d.h. Kondensationsprodukte von Aldehyden mit Melamin und ggfs. nachfolgender Veretherung mit Alkoholen (Melaminharze), Harnstoff (Harnstoffharze), Acetoguanamin (Acetoguanamin-Harze) oder ähnlichen Verbindungen (Urethanharze etc.), genannt. Bevorzugte Aldehydkondensationsprodukte des Melamins sind vor allem die Melamin-Methylol-Alkyläther (Alkyl insbesondere Methyl, n- und i-Butyl), wie Hexamethoxymethylmelamin, Hexakis(methoxymethyl)melamin, Ethoxymethoxymethylmelamin, 6fach methyliertes Methylolmelamin, Monomethylolpentamethoxymethylenmelamin, Dimethylol-tetramethoxymethylenmelamin, Trimethyloltrimethoxymethylenmelamin und dergleichen. Weiterhin sind hier Kondensationsprodukte aus Formaldehyd und Melamin zu nennen, wobei pro Mol Melamin etwa 4 bis 6 Mole Formaldehyd zur Umsetzung gebracht werden und die Kondensationsprodukte dann mit n-Butanol, Isobutanol oder Methanol veräthert werden. Derartige Aminoplastharze sind beispielsweise in der CH-PS 480.380, der DE-AS 1.127.083 sowie in Wagner/Sarx, Lackkunstharze, 1971, S. 61-80 beschrieben. Auf diese Literaturstellen wird hiermit Bezug genommen. Die Härtung mit der Komponente (B) kann durch Katalysatoren, wie p-Toluolsulfonsäure beschleunigt werden.

Als zusätzliche Härter entsprechend der Komponente (C) können erfindungsgemäß gegebenenfalls

Polycarbonsäuren und/oder deren Anhydride, sowie Phenolharze eingesetzt werden, wobei im Falle der Phenolharze die Härtung beispielsweise durch p-Toluolsulfonsäure katalysiert werden kann.

Als zusätzliche Bestandteile (D), die eventuell in der erfindungsgemäßen härtbaren Mischung vorhanden sein können, seien hier - in Abhängigkeit von dem jeweiligen Verwendungszweck - die üblichen Lackadditive wie Pigmente (Eisenoxide, Bleioxide, Bleisilikate, Titandioxid, Bariumsulfat, Zinkoxid, Zinksulfid, Phthalocyaninkomplexe etc.), Pigmentpasten, Antioxidatien, (UV-)Stabilisatoren, Verlauf- bzw. Verdickungsmittel, Entschäumer und/oder Netzmittel, Reaktivverdünner, Füllstoffe (Talkum, Glimmer, Kaolin, Kreide, Quarzmehl, Asbestmehl, Schiefermehl, verschiedene Kieselsäuren, Silikate etc.), Katalysatoren, inerte Löse- bzw. Verdünnungsmittel (u.a. die bei der Herst. der Komponente A erwähnten) udgl. genannt. Diese Additive können der Mischung gegebenenfalls erst unmittelbar vor der Verarbeitung zugegeben werden.

Zur Herstellung der erfindungsgemäßen härtbaren Mischungen werden die Komponenten (A) und (B) sowie gegebenenfalls zusätzlich (C) gemischt. Bei Komponenten mit niedriger Viskosität kann dies in Substanz erfolgen, wobei gegebenenfalls auf höhere Temperaturen erwärmt wird. Produkte höherer Viskosität werden vor der Mischung in inerten, organischen Lösemitteln gelöst. Als inerte Lösemittel können dabei grundsätzlich die gleichen verwendet werden, die auch bei der Herstellung der Komponente (A) Einsatz finden (siehe weiter oben), also beispielsweise Alkohole(im Falle von Aminoplastharzen als Komponente (B)-), Ketone, Ester Ether, Kohlenwasserstoffe etc..

Die Härtung der Überzüge kann nach dem Auftragen auf das Substrat in üblicher Weise erfolgen, beispielsweise bei Raumtemperatur innerhalb von wenigen Minuten bis zu mehreren Tagen je nach angestrebtem Härtungsgrad oder nach Ablüften bei Raumtemperatur bei Temperaturen von 30 bis 160, vorzugsweise 40 bis 140 ° C entsprechend kürzer.

Die mit den erfindungsgemäßen Mischungen erhältlichen Härtungsprodukte zeichnen sich vor allem durch folgende Eigenschaften aus:
gute Lösemittelbeständigkeit, obwohl nur verhältnismäßig geringe Mengen an Polyisocyanat verwendet werden (relativ niedrige OH-Zahlen);
gute Lichtstabilität;
gutes Haftvermögen auf Substraten;
niedrige Härtungstemperaturen; diese liegen häufig schon bei Raumtemperatur oder nur wenig darüber;
hohe Werte für die (Pendel-) Härte auch schon nach kurzen Härtungszeiten.

Die erfindungsgemäßen Mischungen können wegen ihrer günstigen Eigenschaften eine vielseitige technische Anwendung finden, z.B. zur Herstellung von Formkörpern (Gießharze) oder zur Herstellung von Überzügen. Aufgrund der guten Haftungseigenschaften sowie der guten Lösungsmittel- und Witterungsstabilität kommen dabei insbesondere auch Aus- und Verkleidungen von Gerätschaften in Frage, die in der chemischen Industrie oder im Außeneinsatz verwendet werden oder die mit Treibstoffen in Berührung kommen.

Weiterhin können die erfindungsgemäßen Mischungen als Bestandteile von Klebern, Kitten und insbesondere als Bestandteile von Anstrichmitteln und Lacken zum Beschichten von Industriegegenständen, Haushaltsgeräten, Möbeln sowie im Bauwesen und insbesondere im Fahrzeugwesen, z.B. als Grund- und/oder Dechlacke, bei integrierten Kunststoff-Metall-Lackierungen und als Autoreparaturlacke Einsatz finden.
Derartige Lacke enthalten neben den erfindungsgemäßen Mischungen (als Bindemittel) die auf dem Lacksektor üblichen Zusatzstoffe, wie Pigmente, Pigmentpasten, Antioxidanten, oberflächenaktive Mittel, Lösungsmittel, Verlauf- bzw. Verdickungsmittel, Reaktivverdünner, Füllstoffe udgl..

Die Erfindung wird durch die nachstehenden Beispiele näher erläutert. Alle Mengenangaben beziehen sich darin - falls nicht anders angegeben - auf Gewichtsteile. Die Bestimmung des Molekulargewichts $\overline{M}_w$ erfolgte mittels der Gelpermeationschromatographie (Polystyrol-Standard).

OHZ bedeutet OH-Zahl und SZ Säurezahl.

Beispiele

a) Herstellung der Komponente (A)

Es wurden die in der nachfolgenden Tabelle 1 aufgeführten Monomeren in Methoxypropylacetat ( = MPA) copolymerisiert. Dazu wurde das Lösemittel in einem Glaskolben vorgelegt, das Rektionsgefäß evakuiert und mittels Stickstoff Druckausgleich geschaffen. Unmittelbar von Versuchsbeginn wurde zu dem Monomerengemisch der Initiator (Di-tert. Butylperoxid) zugefügt. Das Lösemittel wurde dann auf 140 ° C angeheizt und das jeweilige Monomerengemisch innerhalb von 6 Stunden zudosiert. Nach Dosierende wurde bei 140 ° C eine Nachreaktionszeit angeschlossen und die Lösung danach mit MPA jeweils auf 60 %

Feststoff eingestellt.

Tabelle 1

| | Beispiel 1 | Beispiel 2 | Beispiel 3 | Beispiel 4 |
|---|---|---|---|---|
| Lösemittel (MPA) | 66,66 | 66,66 | 66,66 | 66,66 |
| Styrol | 37,63 | 37,63 | 37,63 | 27,13 |
| Methylmethacrylat | 27,13 | 25,73 | 28,53 | 37,63 |
| Hydroxyethylacrylat | 25,94 | 22,69 | 29,19 | 25,94 |
| Cycl. Carbonat* | 9,30 | 13,95 | 4,65 | 9,30 |
| Initiator | 2,00 | 2,00 | 2,0 | 2,0 |

* = (2-Oxo-1,3-dioxolan-4-yl)methylmethacrylat

In der Tabelle 2 sind die Werte bezüglich OH-Zahlen, Säurezahl und $\overline{M}_w$ der erhaltenen Polymeren (= Komp. (A)) sowie der Feststoffgehalt der Lösung angegeben.

Tabelle 2

| | Beispiel 1 | Beispiel 2 | Beispiel 3 | Beispiel 4 |
|---|---|---|---|---|
| OHZ | 114 | 102 | 124 | 113 |
| SZ | 3,9 | 3,6 | 3,9 | 3,5 |
| MW | 11535 | 13023 | 11356 | 12371 |
| Feststoffgehalt | 60 | 60 | 60 | 60 |

b) Herstellung der erfindungsgemäßen Mischung und Beschichtung

1) Komponente (B) = Polyisocyanat

Die Komponente (A) gemäß Beispiel 3, gelöst in MPA, wurde mit dem Polyisocyanat sowie weiteren Zusatzstoffen gemäß der nachfolgenden Tabelle 3 bei Raumtemperatur gemischt.

Zu Vergleichszwecken wurde in dem Vergleichsversuch 1 als Komponente (A) ein hydroxylgruppenhaltiges Acrylharz eingesetzt, das keine cyclischen Carbonatgruppen enthielt.

Die Polymerlösungen wurden mit Butylacetat auf eine Viskosität (DIN 53211/20 °C) von 50 Sekunden eingestellt und dann in einer Naßschichtdicke von 100 µm auf Glasplatten aufgezogen. Die Prüfergebnisse zeigt die Tabelle 4.

Tabelle 3

| | Erfindungsgemäß | Vergleichsversuch 1 |
|---|---|---|
| Acrylharz (60 %ige Lösung) (Komponente (A)) | 82,0[1)] | 82,0[2)] |
| Polyisocyanat [3)] (Komponente B)) | 33,0 | 33,0 |
| UV-Absorber des Typs Hydroxyphenylbenztriazol ((R)Tinuvin 900 . 10 %ig in Xylol) | 5,0 | 5,0 |
| Diethylethanolamin (100 %) | 0,3 | 0,3 |
| Dibutylzinndilaurat (1 %ig in Xylol) | 0,2 | 0,2 |
| Butylacetat | 6,0 | 6,0 |
| (R)Solvesso 100 | 2,0 | 2,0 |
| Xylol | 3,0 | 3,0 |

1) Komponente (A) entsprechend Beispiel 3

2) Hydroxyfunktionelles Acrylharz; $\overline{M}_w$:12500 OH-Zahl: 140 ((R)Macrynal SM 510n)

3) Umsetzungsprodukt von Hexamethylendiisocyanat und Wasser; 75 %-ig in Ethylenglykolmonoethyletheracetat ((R)Desmodur N).

Tabelle 4
(Prüfergebnisse)

| | Erfindungsgemäß | Vergleichsversuch 1 |
|---|---|---|
| Lufttrocknung (Raumtemperatur) | | |
| Staubtrocknung | 12 | 17 |
| Klebfreitrocknung | 1 h | 3 h |
| Pendelhärte 2 h | 20 " | klebt |
| 4 h | 28 " | klebt |
| 6 h | 34 " | 17 " |
| 16 h | 121 " | 41 " |
| 24 h | 141 " | 60 " |
| 48 h | 187 " | 121 " |
| Benzinbeständigkeit | | |
| 16 h | 5' | sofort |
| 24 h | 7' | 1' |
| 72 h | >30' | 10' |
| Forcierte Trocknung bei 60°C, 45 Minute | | |
| Pendelhärte 2 h | 138" | 45" |
| 24 h | 190" | 150" |
| Benzinbeständigkeit | | |
| 2 h | 11' | 5' |
| 24 h | 20' | 11' |

Staubtrocknung: nach DIN 53150 (Trocknungsgrad 1)
Klebfreitrocknung: nach DIN 53150 (Trocknungsgrad 2)
Pendelhärte: nach DIN 53175
Benzinbeständigkeit: nach DIN 53168

2. Komponente (B) = Melaminharz

Es wurde analog wie bei b1) verfahren, jedoch mit dem Unterschied, daß als Komponente (B) ein Melaminharz eingesetzt wurde. Als Komponente (A) dienten die Acrylharze gemäß den Beispielen 2, 3 und 4.

Für Vergleichszwecke wurde ein Lack auf Basis hydroxylgruppenhaltiges Acrylharz/Melaminharz verwendet, wobei das Acrylharz keine cyclischen Carbonatgruppen enthielt (→ Lack 4).
Die nachstehende Tabelle 5 zeigt die Zusammensetzung der betreffenden Lacke.

Die Polymerlösungen wurden mit Butylacetat auf eine Viskosität von 26 Sekunden eingestellt (DIN 53211/23 ° C) und dann in einer Naßschichtdicke von 100 mμ auf Glasplatten aufgezogen. Die Prüfergebnisse gibt die Tabelle 6 wieder.

Tabelle 5

| | Lack 1 | Lack 2 | Lack 3 | Lack 4* |
|---|---|---|---|---|
| Acrylharz (Komponente (A)) | 62,2 1) | 62,2 2) | 62,2 3) | 52,5 4) |
| Nicht plastifiziertes methylveräthertes Melamin-Formaldehydharz (70 %-ig in i-Butanol; (R)Maprenal MF 927) (=Kompo. B) | 22,9 | 22,9 | 22,9 | 22,9 |
| Butylacetat | 13,9 | 13,9 | 13,9 | 22,6 |
| UV-Absorber des Typs Hydroxyphenyltriazol ((R)Tinuvin 900; 10 %-ig in Xylol) | 0,5 | 0,5 | 0,5 | 0,5 |

*Vergleichsprobe

1) Komponente (A) entsprechend Beispiel 2; } Menge an
2) " " " " 3; } festem
3) " " " " 4; } Harz = 37,32
4) Gemisch aus 28,7 Teilen eines hydroxyfunktionellen Acrylharzes mit Viskosität von 800 bis 1400 mPas (nach DIN 53015/20°C; mit Xylol auf 50 % verdünnt - (R)Synthacryl SC 303; 65 %-ig in Xylol/Butanol 3:1) und 24,8 Teilen eines hydroxyfunktionellen Acrylharzes mit Viskostiät von 200-300 mPas ((R)Synthacryl SC 370; 75 %-ig in ®Solvesso 100). Menge an festem Harz = 37,2 Teile.

Tabelle 6

(Prüfungsergebnisse)

| | Lack 1 (70:30) | Lack 2 (70:30) | Lack 3 (70:30) | Lack 4* (35:35.30) |
|---|---|---|---|---|
| (DIN 53157) | | | | |
| 30'/80°C } Härtungsbedingungen | 96" | 94" | 86" | klebfrei |
| 30'/140°C } Härtungsbedingungen | 213" | 197" | 209" | 169" |
| Superbenzin-Test (DIN 53168) 30'/80°C | ca. 1 min. | ca. 1 min. | ca. 1 min. | ca. 30 sec. |
| 30'/140°C | 30 min. | >60 min. | 45 min. | 3 min. |
| Wassertest (aufgesetzt) (DIN 53168**) 30'/80°C | nach 30 min. weiß angelaufen | nach 30 min. weiß angelaufen | nach 30 min. weiß angelaufen | nach 20 min. weiß angelaufen |
| 30'/140°C | feine Blasenbildung nach 3 Std. | feine Blasenbildung nach 3 Std. | feine Blasenbildung nach 3 Std. | feine Blasenbildung nach 2 Std. |

* Vergleichsprobe

** Zwischenbeurteilung nach Zeit entsprechend dieser Tabelle 6

## Patentansprüche

1. Härtbare Mischungen auf Basis von
   (A) Copolymer, enthaltend 1,3 Dioxolan-2-on-Gruppen, Hydroxylgruppen sowie gegebenenfalls weitere Gruppen, ausgenommen Diglyzeroldicarbonat und Vinylencarbonat
   (B) Polyisocyanaten und/oder Aminoplastharzen sowie
   (C) gegebenenfalls weiteren härtbaren Verbindungen.

2. Härtbare Mischungen von Anspruch 1, dadurch gekennzeichnet, daß die Verbindungen (A) aus Struktureinheiten bestehen, die sich ableiten von
   (a) einem 1,3-Dioxolan-2-on-Gruppen enthaltenden, olefinisch ungesättigten Monomeren in einer Menge von 3 bis 95 Gew.-%, bezogen auf (A),
   (b) einem olefinisch ungesättigten Monomeren, das mit (a) copolymerisierbar ist und OH-Gruppen enthält, in Mengen von 95 bis 7 Gew.-%, bezogen auf (A), und gegebenenfalls.
   (c) einem oder mehreren mit (a) und (b) copolymerisierbaren und von (a) und (b) verschiedenen olefinisch ungesättigten Monomeren in Mengen bis zu 90 Gew.-%, bezogen auf (A).

3. Härtbare Mischungen nach Anspruch 2, dadurch gekennzeichnet, daß der Anteil von (a) 5 bis 70 Gew.-% und der Anteil von (b) 95 bis 30 Gew.-% beträgt.

4. Härtbare Mischungen nach einem oder mehreren der Ansprüche 1 bis 3, dadurch gekennzeichnet, daß die 1,3-Dioxolan-2-on-Gruppen statistisch über die Molekülkette von (A) verteilt sind.

5. Härtbare Mischungen nach einem oder mehreren der Ansprüche 2 bis 4, dadurch gekennzeichnet, daß die Monomeren gemäß (a) die allgemeine Formel

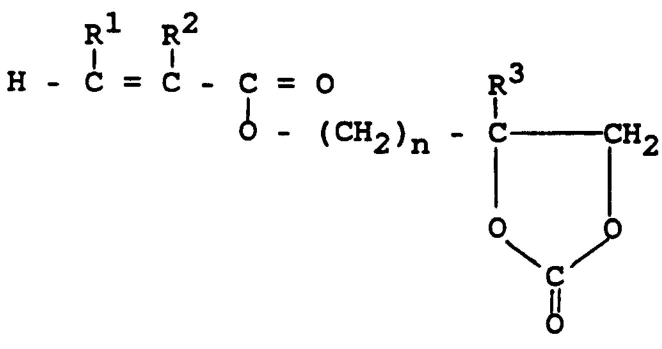

(I)

besitzen, worin n für eine ganze Zahl 1 bis 6 und $R^1$ für H, Alkyl, COOR′ stehen (R′ = H oder Alkyl), $R^2$ unabhängig von $R^1$ H oder Alkyl bedeutet, und $R^3$ H, Methyl oder Ethyl darstellt.

6. Härtbare Mischungen nach einem oder mehreren der Ansprüche 2 bis 5, dadurch gekennzeichnet, daß es sich bei den Monomeren entsprechend (b) um hydroxylgruppenhaltige Ester von olefinisch ungesättigten Mono- oder Dicarbonsäuren mit 1 bis 8 C-Atomen im Alkoholrest handelt.

**7.** Härtbare Mischungen nach einem oder mehreren der Ansprüche 2 bis 6, dadurch gekennzeichnet, daß es sich bei den Monomeren entsprechend (c) handelt um mindestens ein Monomeres aus der Gruppe: (c1) vinylaromatische Kohlenwasserstoffe, (c2) Ester, Amide oder Nitrile von olefinisch ungesättigten Mono- oder Dicarbonsäuren, (c3) addierbare Ester von gesättigten Monocarbonsäuren, (c4) olefinisch ungesättigte Mono- oder Dicarbonsäuren, wobei bei Anwesenheit von (c3) mindestens eine äquivalente Menge dieser Komponenten (c4) vorhanden ist, (c5) Glycidylester von olefinisch ungesättigten Mono- oder Dicarbonsäuren, (c6) ungesättigte Ester von gesättigten Monocarbonsäuren.

**8.** Härtbare Mischungen nach einem oder mehreren der Ansprüche 2 bis 7, dadurch gekennzeichnet, daß die Verbindungen (A) neben den Struktureinheiten entsprechend (a) und (b) noch solche entsprechend (c1) und/oder (c2) enthalten.

**9.** Härtbare Mischungen nach einem oder mehreren der Ansprüche 1 bis 8, dadurch gekennzeichnet, daß es sich bei den Verbindungen (A) um folgende handelt;
2-(Oxo-1,3-dioxolan-4-yl)methyl(meth)acrylat/2-Hydroxyethyl(meth)acrylat/Butyl(meth)acrylat/Ethylhexyl-(meth)acrylat;
2-(Oxo-1,3-dioxolan-4-yl-)methyl(meth)acrylat/2-Hydroxyethyl(meth)acrylat/Butyl(meth)-acrylat/Ethylhexyl(meth)acrylat/Styrol;
2-(Oxo-1,3-dioxolan-4-yl-)methylitaconat/2-Hydroxyethyl(meth)acrylat/Butyl(meth)acrylat/Ethylhexyl-(meth)acrylat;
2-(Oxo-1,3-dioxolan-4-yl-)methylmaleat/2-Hydroxyethyl(meth)acrylat/Butyl (meth)acrylat/Ethylhexyl-(meth) acrylat;
2-(Oxo-1,3-dioxolan-4-yl-)methyl(meth)acrylat/2-Hydroxyethyl(meth)acrylat/Methyl(meth)acrylat/Styrol.

**10.** Härtbare Mischungen nach einem oder mehreren der Ansprüche 1 bis 9, dadurch gekennzeichnet, daß die Verbindungen (A) Molekulargewichte $\overline{M}_w$ von 1 000 bis 50 000 und OH-Zahlen von 20 bis 200 besitzen.

**11.** Härtbare Mischungen nach einem oder mehreren der Ansprüche 1 bis 10, dadurch gekennzeichnet, daß als Polyisocyanat das Umsetzungsprodukt aus 3 Mol Hexamethylendiisocyanat und 1 Mol Wasser eingesetzt wird.

**12.** Härtbare Mischungen nach einem oder mehreren der Ansprüche 1 bis 10, dadurch gekennzeichnet, daß es sich bei den Aminoplastharzen am Melaminharze handelt.

**13.** Härtbare Mischungen nach einem oder mehreren der Ansprüche 1 bis 12, dadurch gekennzeichnet, daß es bei den Härtern gemäß (C) um Phenolharze handelt.

**14.** Verwendung der Mischungen gemäß einem oder mehreren der Ansprüche 1 bis 13 zur Herstellung von Formkörpern oder Überzügen.

**15.** Verwendung der Mischungen gemäß einem oder mehreren der Ansprüche 1 bis 13 als Bestandteil in Lacken oder Klebstoffen.

**16.** Verwendung nach Anspruch 15, dadurch gekennzeichnet, daß es bei den Lacken um Autodecklacke oder um Autoreparaturlacke handelt.

## Claims

**1.** A curable mixture based on
(A) Copolymers containing 1,3-dioxolan-2-one groups, hydroxyl groups and, if appropriate, further groups, with the exception of diglycerol dicarbonate and vinylene carbonate.
(B) polyisocyanates and/or aminoplast resins and
(C) if appropriate, further curable compounds.

**2.** A curable mixture as claimed in claim 1, wherein the compounds (A) comprise structural units derived from
(a) an olefinically unsaturated monomer, containing 1,3-dioxolan-2-one groups, in a quantity from 3

to 95% by weight relative to (A),
(b) an olefinically unsaturated monomer, which is copolymerizable with (a) and contains OH groups, in quantities from 95 to 7% by weight relative to (A), and, if appropriate,
(c) one or more olefinically unsaturated monomers other than (a) and (b), which are copolymerizable with (a) and (b), in quantities of up to 90% by weight relative to (A).

**3.** A curable mixture as claimed in claim 2, wherein the proportion of (a) is 5 to 70% by weight and the proportion of (b) is 95 to 30% by weight.

**4.** A curable mixture as claimed in one or more of claims 1 to 3, wherein the 1,3-dioxolan-2-one groups are randomly distributed along the molecule chain of (A).

**5.** A curable mixture as claimed in one or more of claims 2 to 4, wherein the monomers according to (a) are of the formula

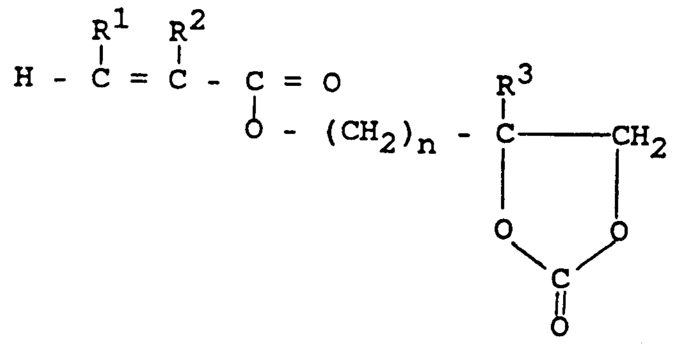

(I)

in which n is an integer from 1 to 6, $R^1$ is H, alkyl or COOR' (R' = H or alkyl), $R^2$ is, independently of $R^1$, H or alkyl and $R^3$ is H, methyl or ethyl.

**6.** A curable mixture as claimed in one or more of claims 2 to 5, wherein the monomer according to (b) is an ester, containing hydroxyl groups, of an olefinically unsaturated mono- or di-carboxylic acid having 1 to 8 carbon atoms in the alcohol radical.

**7.** A curable mixture as claimed in one or more of claims 2 to 6, wherein the monomer according to (c) is at least one monomer from the group comprising: (c1) vinylaromatic hydrocarbons, (c2) esters, amides or nitriles of olefinically unsaturated mono- or di-carboxylic acids, (c3) esters, capable of addition, of saturated monocarboxylic acids, (c4) olefinically unsaturated mono- or di-carboxylic acids, and, in the presence of (c3), at least an equivalent quantity of these components (c4) being present, (c5) glycidyl esters of olefinically unsaturated mono- or dicarboxylic acids and (c6) unsaturated esters of saturated monocarboxylic acids.

**8.** A curable mixture as claimed in one or more of claims 2 to 7, wherein the compounds (A) also contain, in addition to the structural units according to (a) and (b), those corresponding to (c1) and/or (c2).

**9.** A curable mixture as claimed in one or more of claims 1 to 8, wherein compound (A) is one of the following:
(2-oxo-1,3-dioxolan-4-yl)-methyl (meth)acrylate/2-hydroxyethyl (meth)acrylate/butyl (meth)-acrylate/ethylhexyl (meth)acrylate;
(2-oxo-1,3-dioxolan-4-yl)-methyl (meth)acrylate/2-hydroxyethyl (meth)acrylate/butyl (meth)-acrylate/ethylhexyl (meth)acrylate/styrene;
(2-oxo-1,3-dioxolan-4-yl)-methyl itaconate/2-hydroxyethyl (meth)acrylate/butyl (meth)acrylate/ethylhexyl (meth)acrylate;
(2-oxo-1,3-dioxolan-4-yl)-methyl maleate/2-hydroxyethyl (meth)acrylate/butyl (meth)acrylate/ethylhexyl (meth)acrylate;
(2-oxo-1,3-dioxolan-4-yl)-methyl (meth)acrylate/2-hydroxyethyl (meth)acrylate/methyl (meth)-

acrylate/styrene.

**10.** A curable mixture as claimed in one or more of claims 1 to 9, wherein the compounds (A) have molecular weights $\overline{M}_w$ from 1,000 to 50,000 and OH numbers from 20 to 200.

**11.** A curable mixture as claimed in one or more of claims 1 to 10, wherein the reaction product of 3 mol of hexamethylene diisocyanate and 1 mol of water is used as the polyisocyanate.

**12.** A curable mixture as claimed in one or more of claims 1 to 10, wherein the aminoplast resin is a melamine resin.

**13.** A curable mixture as claimed in one or more of claims 1 to 12, wherein the curing agent according to (C) is a phenolic resin.

**14.** The use of a mixture as claimed in one or more of claims 1 to 13 for the production of moldings or coatings.

**15.** The use of a mixture as claimed in one or more of claims 1 to 13 as a constituent in coating agents or adhesives.

**16.** The use as claimed in claim 15, wherein the coating agents are vehicle topcoats or vehicle refinishes.

**Revendications**

**1.** Mélanges durcissables à base
(A) de copolymères contenant des groupes dioxolanne-1,3 one-2, des groupes hydroxyle et éventuellement d'autres groupes, à l'exception du dicarbonate de diglycérol et du carbonate de vinylène
(B) de polyisocyanates et/ou de résines aminoplastes, et
(C) éventuellement d'autres composés durcissables.

**2.** Mélanges durcissables selon la revendication 1, caractérisés en ce que les composés (A) sont constitués de motifs structuraux qui dérivent
(a) d'un monomère à insaturation oléfinique contenant des groupes dioxolanne-1,3 one-2 en une quantité de 3 à 95 % en poids par rapport à (A),
(b) d'un monomère à insaturation oléfinique copolymérisable avec (a) et contenant des groupes OH, en des quantités de 95 à 7 % en poids par rapport à (A), et éventuellement
(c) d'un ou plusieurs monomères à insaturation oléfinique, copolymérisables avec (a) et (b) et différents de (a) et (b), en des quantités allant jusqu'à 90 % en poids par rapport à (A).

**3.** Mélanges durcissables selon la revendication 2, caractérisés en ce que le pourcentage de (a) est de 5 à 70 % en poids et que le pourcentage de (b) est de 95 à 30 % en poids.

**4.** Mélanges durcissables selon l'une ou plusieurs des revendications 1 à 3, caractérisés en ce que les groupes dioxolanne-1,3 one-2 sont répartis d'une manière statistique le long de la chaîne moléculaire de (A).

**5.** Mélanges durcissables selon l'une ou plusieurs des revendications 2 à 4, caractérisés en ce que les monomères selon (a) ont la formule générale

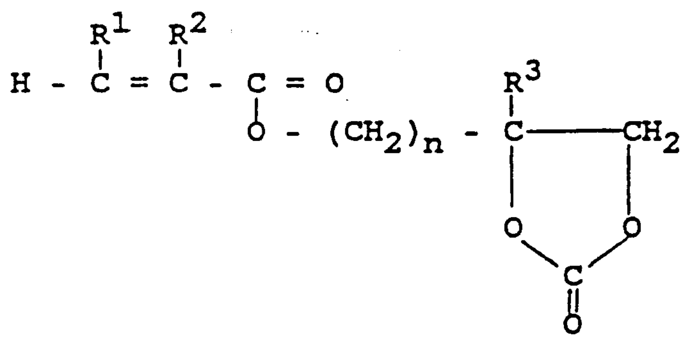

(I)

dans laquelle n est un nombre entier de 1 à 6, et $R^1$ est H ou un radical alkyle ou COOR' (R' = H ou un radical alkyle), $R^2$, indépendamment de $R^1$, est H ou un radical alkyle, et $R^3$ est H ou le radical méthyle ou éthyle.

**6.** Mélanges durcissables selon l'une ou plusieurs des revendications 2 à 5, caractérisés en ce que, pour ce qui est des monomères selon (b), il s'agit d'esters contenant des groupes hydroxyle d'acides mono- ou dicarboxyliques à insaturation oléfinique ayant 1 à 8 atomes de carbone dans le résidu alcool.

**7.** Mélanges durcissables selon l'une ou plusieurs des revendications 2 à 6, caractérisés en ce que, pour ce qui est des monomères selon (c), il s'agit d'au moins un monomère choisi dans le groupe : (c1) hydrocarbures vinylaromatiques, (c2) esters, amides ou nitriles d'acides mono- ou dicarboxyliques à insaturation oléfinique, (c3) esters pouvant subir une réaction d'addition d'acides monocarboxyliques saturés, (c4) acides mono- ou dicarboxyliques à insaturation oléfinique, auquel cas, en présence de (c3), on a au moins présente une quantité équivalente de ces composants (c4), (c5) esters glycidyliques d'acides mono- ou dicarboxyliques à insaturation oléfinique, (c6) esters insaturés d'acides monocarboxyliques saturés.

**8.** Mélanges durcissables selon l'une ou plusieurs des revendications 2 à 7, caractérisés en ce que les composés (A), outre les motifs structuraux selon (a) et (b), en contiennent encore selon (c1) et/ou (c2).

**9.** Mélanges durcissables selon l'une ou plusieurs des revendications 1 à 8, caractérisés en ce que, pour ce qui est des composés (A), il s'agit des composés suivants :

(Méth)acrylate de (oxo-2 dioxolanne-1,3 yl-4)méthyle/(méth)acrylate d'hydroxy-2 éthyle/(méth)-acrylate de butyle/(méth)acrylate d'éthylhexyle ;

(Méth)acrylate de (oxo-2 dioxolanne-1,3 yl-4)méthyle/(méth)acrylate d'hydroxy-2 éthyle/(méth)-acrylate de butyle/(méth)acrylate d'éthylhexyle/styrène ;

Itaconate de (oxo-2 dioxolanne-1,3 yl-4)méthyle/(méth)acrylate d'hydroxy-2 éthyle/(méth)acrylate de butyle/(méth)acrylate d'éthylhexyle ;

Maléate de (oxo-2 dioxolanne-1,3 yl-4)méthyle/(méth)acrylate d'hydroxy-2 éthyle/(méth)acrylate de butyle/(méth)acrylate d'éthylhexyle ;

(Méth)acrylate de (oxo-2 dioxolanne-1,3 yl-4)méthyle/(méth)acrylate d'hydroxy-2 éthyle/(méth)-acrylate de méthyle/styrène.

**10.** Mélanges durcissables selon l'une ou plusieurs des revendications 1 à 9 caractérisés en ce que les composés (A) ont une masse moléculaire $M_W$ de 1000 à 50 000 et un indice d'hydroxyle de 20 à 200.

**11.** Mélanges durcissables selon l'une ou plusieurs des revendications 1 à 10, caractérisés en ce qu'on utilise comme polyisocyanate le produit de la réaction de 3 moles de diisocyanate d'hexaméthylène et de 1 mole d'eau.

**12.** Mélangés durcissables selon l'une ou plusieurs des revendications 1 à 10, caractérisés en ce que, pour ce qui est des résines aminoplastes, il s'agit de résines de mélamine.

**13.** Mélanges durcissables selon l'une ou plusieurs des revendications 1 à 12 caractérisés en ce que, pour ce qui est des durcisseurs selon (C), il s'agit de résines phénoliques.

**14.** Utilisation des mélanges selon l'une ou plusieurs des revendications 1 à 13, pour la préparation d'objets moulés ou de revêtements.

**15.** Utilisation des mélanges selon l'une ou plusieurs des revendications 1 à 13, comme constituants de peintures et vernis ou d'adhésifs.

**16.** Utilisation selon la revendication 15, caractérisée en ce que, pour ce qui est des peintures et vernis, il s'agit de vernis pour carrosserie automobile ou de peintures pour retouches de carrosserie.